# EUROPEAN PATENT SPECIFICATION

(11) **EP 2 611 308 B1**
(45) Date of publication and mention of the grant of the patent: **24.08.2016**
(21) Application number: 11779338.0
(22) Date of filing: 31.08.2011
(51) Int. Cl.: A23K 20/163, A23K 50/10

(54) **METHOD OF INCREASING THE AMOUNT OF PROTEINS AND/OR LIPIDS IN THE MILK OF A LACTATING RUMINANT**
VERFAHREN ZUR ERHÖHUNG DER MENGE VON PROTEINEN UND/ODER FETTEN IN DER MILCH EINES LAKTIERENDEN WIEDERKÄUERS
PROCÉDÉ VISANT À ACCROÎTRE LA TENEUR EN PROTÉINES ET/OU LIPIDES DU LAIT D'UN RUMINANT EN LACTATION

(30) Priority: 31.08.2010 EP 10009027
(43) Date of publication of application: 10.07.2013
(73) Proprietor: BENEO-Orafti S.A., 4360 Oreye (BE)
(72) Inventor: THURMAN, Karel, B-8530 Harelbeke (BE); VANVOLSEM, Thibaut, B-5380 Pontillas (BE)
(74) Representative: Koster, Nico
(86) International application number: PCT/EP2011/004371
(87) International publication number: WO 2012/028302

(56) References cited:
- WO-A1-00/78160
- WO-A1-03/045401
- WO-A1-2010/015708

## Description

The invention relates to a method of increasing the amount of proteins and/or lipids as provided by a lactating ruminant via milk.

Ever since lactating ruminants such as cows have been kept and bred for their milk production, methods have been sought to maximise the amount and quality of milk per day that is delivered by the ruminant. It has long been established that it is not sufficient to simply provide more feed to the ruminant, but that the composition of the feed itself is an important factor.

One known method of increasing the amount of milk comprises the step of adding monopropylene glycol (MPG, chemical formula HO-CH₂-CHOH-CH₃, also referred to as PG, as 1,2-propanediol, or as α-propylene, glycol) to the feed for a ruminant, especially a ruminant in early lactation (Nielsen and Ingvartsen, Animal Feed Science and Technology 115 (2004), pages 191-213).

It is a disadvantage of the known method that although the feeding of MPG may lead to an increased output of milk per day in early lactating ruminants, at the same time the quality of the milk in terms of the concentration of lipids and/or proteins may decrease. Furthermore, the feeding of MPG appears to have no significant effect on the milk production in later lactating phases; moreover, MPG is known to have low palatability and to lead to a strain on the functioning of the liver of the ruminant.

It is an objective of the present invention to reduce or even eliminate the disadvantages mentioned above.

The objective is achieved in that the method comprises the step of feeding the ruminant between 0.3 and 15 grams per kg body weight and per day of carbohydrates that are soluble, slowly fermentable in the stomach of the ruminant, and digestible and optionally fermentable in the intestines of the ruminant, wherein the carbohydrates that are soluble, slowly fermentable in the stomach of the ruminant and digestible and optionally fermentable in the intestines of the ruminant consist essentially of isomaltulose and/or trehalulose.

It is an advantage of the method according to the invention that the quality and/or quantity of the milk as provided by a lactating ruminant can increase. It is a further advantage of the present invention that side effects such as acidosis, associated with the consumption of many types of quickly fermentable carbohydrates, are reduced or even largely or even completely absent. It is yet a further advantage of the present invention that it can help in avoiding a strain on the functioning of the liver of the ruminant.

WO-A-2010 015708 discloses a feed for milk-producing animals comprising extruded flax seeds and a fat content of between 23% and 30% by weight relative to the total weight of the feed, characterized in that it also comprises at least one reducing sugar in the form of a disaccharide comprising at least one fructose unit, derivatives thereof, isomers thereof and mixtures thereof. In WO-A-2010 015708 the detailed composition of the lipids in milk is discussed; in particular, a relative increase of C18 fatty acids as calculated on the total amount of lipids, and a relative decrease of C4 - C17 fatty acids as calculated on the total amount of lipids, is disclosed. Furthermore, in WO-A-2010 015708 the known phenomenon of milk fat depression is mentioned; this is a reduction of the lipid content of milk, shown to be linked to the presence of lipids in the feed of the ruminant (see also Harvatine et.al. in J. Nutrition, vol 139, no. 5, pages 849-854, 2009).

WO-A-00 78160 discloses a method of enhancing milk production by a ruminant that includes providing a feed that contains sorbitol and at least one additional feed component, and orally feeding the feed to the ruminant, the ruminant ingesting about 100 grams, or less, of sorbitol per day.

WO-A-03 045401 discloses a method of improving the health and production of ruminant animals, the method including the step of orally administering to the animal an effective amount of an indigestible oligosaccharide selected from the group of gluco-oligosaccharides and isomalto-oligosaccharides.

As is known, the quality of milk is judged a.o. by the concentration of proteins, lipids (fat), and lactose in the milk. A general rule for especially proteins and lipids is that higher concentrations are favoured; furthermore, it is typical that the concentration of lactose hardly varies in function of the type of feed that is provided to the ruminant.

The determination of these concentrations is well-known to the person skilled in the art:
Protein content is often derived from a nitrogen analysis (such as a Kjeldahl analysis) multiplied by a milk-specific factor.

Fat content is often determined via the so-called Gerber method, in which milk fat is separated from proteins by adding sulphuric acid. The separation is facilitated by using amyl alcohol and centrifugation. The fat content is read directly via a special calibrated butyrometer.

Lactose content is often determined via enzymatic reactions that cause a pH variation directly proportional to the lactose contents in a sample.

Alternatively, the amount of proteins, lipids and lactose can be determined via Fourier Transform InfraRed (FTIR) analysis, as is put into practice by a.o. Foss Electric from Denmark.

The method according to the invention relates to ruminants. As is known, a ruminant is a mammal of the order *Artiodactyla* that digests plant-based food by initially softening it within a first stomach compartment, then regurgitating and chewing the semi-digested mass. Ruminating mammals include *bovinae* (such as cattle, *bos primigenius),* goats, sheep, giraffes, bison, yaks, water buffalo, deer, camels, and others. Preferably, the ruminant is cattle (cow), goat, or sheep (*Ovis aries),* most preferably a cow. It is a characteristic of ruminants that an intensive fermentation takes place in the stomach, in particular of carbohydrates and proteins. Thus, typical fermentable carbohydrates such as saccharose will be fully broken down in the stomach and lead to the formation of other compounds such as volatile fatty acids (VFA). As used herein, the term stomach refers to the overall stomach system, i.e. including compartments thereof such as the rumen, the recticulum, the omasum, or the abomasum.

According to the invention, the ruminant should be a lactating ruminant. In practice, a distinction can be made between an early lactating phases, for example the first 60 to 80 days after the ruminant has given birth if the ruminant is a cow, and later lactating phases. Characteristics of the early lactating phase are a.o. that the ruminant has a natural tendency to provide as much milk as possible, thereby not sparing its own reserves, and is thus often energy-deficient.

In one embodiment of the invention, the method is particularly suitable for ruminants in an early lactating phase, e.g. during the first 70 days after calving if the ruminant is a cow. Without wishing to be bound to theory, it is thought that the feeding of a ruminant according to the present invention can provide a source of direct energy, helping the ruminant to address the strain on its energy balance in the first period of lactation.

In another embodiment of the invention, however, the method is particularly suitable for ruminants in a later lactating phase, in particular from 70 days onwards until the end of lactation, which for a cow is typically about 300 days after calving.

The method according to the invention comprises the step of feeding the ruminant carbohydrates that are soluble, slowly fermentable in the stomach of the ruminant, and digestible and optionally fermentable in the intestines of the ruminant.

As meant herein, the term carbohydrate does not encompass compounds that are obtained by hydrogenation of carbohydrates; such compounds are commonly referred to as polyols or sugar alcohols; examples of such hydrogenated carbohydrates are sorbitol, maltitol, and isomalt. Similarly, the term carbohydrate as used herein does not encompass compounds that are obtained by oxidation of carbohydrates; examples of such oxidised carbohydrates are gluconic acid, maltobionic acid, and lactobionic acid.

As meant herein, a soluble carbohydrate is a carbohydrate that has a solubility in water of at least 1 gram per litre, preferably at least 5, 10, 15, or even 20, 30, or 50 grams per litre, whereby in the solubility determination the carbohydrate is brought together with water that is at room temperature and at neutral pH. Without wishing to be bound to theory, it is believed that the solubility of the carbohydrate reduces its residence time in the stomach of the ruminant significantly as compared to non-soluble compounds. Such a reduced residence time can aid in the achieving of a slow fermentability in the stomach.

As meant herein, a slowly fermentable carbohydrate is a carbohydrate that at least partly escapes fermentation in the stomach; thus, at least 10 wt.%, preferably at least 15 wt.% of the carbohydrate should escape (bypass) fermentation in the stomach and be available for later digestion or possibly fermentation, e.g. occurring in the duodenum and/or in further sections of the intestines of the ruminant. More preferably, at least 20, 25, 30, 35, 40, 45, or even at least 50, 55, 60, 65, or 70 wt.% of the carbohydrate escapes fermentation in the stomach of the ruminant. The weight percentage of carbohydrate that escapes fermentation in the stomach is determined by a comparison with the carbohydrates of sugar cane molasses via the method of Examples 1 and 2 and Comparative Experiment A, described hereinbelow; the determination of the weight percentage of by-passing carbohydrates is to be done by establishing the residual amount at the moment the carbohydrates of sugar cane molasses are reduced by 95%.

By escaping or bypassing fermentation in the stomach, the carbohydrate now becomes available to the ruminant for other processes such as in particular a direct intestinal digestion or an intestinal fermentation. The carbohydrate as meant in the invention is digestible. As meant herein, the term digestible means that the ruminant is able to ensure that in the intestines at least 10%, 15%, 20%, 25%, 30%, 40%, 50%, 60%, 70%, 75%, or even essentially all of the saccharide moieties of the carbohydrate that entered the intestines become available as such, preferably via enzymatic hydrolysis, and may then be absorbed for systemic use.

In a main embodiment, the carbohydrate as meant in the invention is fermentable in the intestines. As meant herein, the term fermentable in the intestines means that at least 20%, 30%, 40%, 50%, 60%, 70%, 75%, or even essentially all of the carbohydrate that entered the intestines is fermented by microorganisms in the small intestine or in the large intestine of the ruminant.

In yet a further main embodiment of the invention, the carbohydrate as meant in the invention undergoes in the intestines both digestion as well as fermentation, such that at least 20, 30, 40, 50, 60, 70, 75 wt.%, or even essentially all of the carbohydrate that entered the intestines is either digested or fermented in the intestines.

The measurement of the percentage of combined digestion and fermentation of a carbohydrate in the intestines of a ruminant may be done by comparing measurements of the carbohydrate at the entry of the intestines in the duodenum, as provided in Example 4, with measurements in the faeces of the ruminant, while taking into account the transit times through the intestines.

As used herein, the terms 'essentially', 'consist(ing) essentially of or 'essentially all' and equivalents have, unless noted otherwise, in relation to a composition or a process the usual meaning that deviations in the composition or process may occur, but only to such an extent that the essential characteristics and effects of the composition or process are not materially affected by such deviations.

Advantageously, the systemic availability of the saccharide moieties is achieved without the saccharide moieties having been formed via action of a.o. the liver of the ruminant. As the carbohydrates suitable for use in the present invention will typically consist of more than one saccharide moiety linked together to oligo- or polysaccharides, the digestibility of such carbohydrates entails that the ruminant can split off, e.g. enzymatically, at least part of the monosaccharide moieties from the carbohydrate. It is furthermore preferable that the carbohydrate contains glucose and/or fructose moieties, as these moieties are efficiently absorbed and utilised by ruminants. Preferably, the carbohydrate contains at least 10, 20, 30, 40, 50, 60, 70, or even at least 80% of glucose and/or fructose moieties; particularly preferred are carbohydrates that essentially consist of glucose and/or fructose moieties.

The carbohydrates that are soluble, slowly fermentable in the stomach of the ruminant, and digestible and optionally fermentable in the intestines of the ruminant consist essentially of isomaltulose, trehalulose, or a mixture of isomaltulose and trehalulose. It was surprisingly found that these two isomers of saccharose are fermented at a very slow pace in the stomach of ruminants, while at the same time believed to be digestible and possibly fermentable in the intestinal regions beyond the stomach of ruminants such as cows. In a preferred embodiment, carbohydrates that are soluble, slowly fermentable in the stomach of the ruminant, and digestible and optionally fermentable in the intestines of the ruminant consist of isomaltulose and/or trehalulose.

One preferred example of a carbohydrate mixture of this embodiment is Palatinose syrup, which is a syrup containing isomaltulose (chemical name α-D-Glucopyranosyl-(1→6)-D-fructofuranose) and trehalulose (chemical name α-D-Glucopyranosyl-(1→1)-D-fructose), plus various sugars such as fructose and sucrose. More specifically, Palatinose syrup is understood to be a syrup containing:
i. between 1 wt.% and 25 wt.% fructose, preferably between 7 and 17 wt%;
ii. between 1 wt.% and 25 wt.% glucose, preferably between 5 and 15 wt.%;
iii. between 15 wt.% and 60 wt.% isomaltulose, preferably between 20 and 45 wt.%; and
iv. between 10 wt.% and 60 wt.% trehalulose, preferably between 15 wt.% and 40 wt.%.
wherein the sum of (i.), (ii), (iii) and (iv) is at least 60 wt.%, preferably at least 70 wt.%, and whereby the percentages are expressed as weight percentage of dry matter of the Palatinose syrup as a whole. Palatinose syrup is also known as Palatinose molasses or isomaltulose molasses; these three terms are herein considered to be synonyms.

The method of the invention comprises the step of feeding the ruminant an amount lying between 0.3 and 15 grams per kg body weight and per day of carbohydrates that are soluble, slowly fermentable in the stomach of the ruminant, and digestible and optionally fermentable in the intestines of the ruminant.

Preferably, at least 0.4, 0.5, 0.6, 0.7, 0.8, 0.9, or even at least 1.0 grams per kg body weight per day are fed to the ruminant. The amount is at most 15 grams per kg body weight and per day for reasons of economy; preferably, the amount is at most 14, 13, 12, 11, 10, 9, 8, 7, 6, or 5 grams per kg body weight and per day.

Thus, in one main embodiment of the invention, an isomaltulose and/or trehalulose-containing source of carbohydrates such as Palatinose syrup is fed to a ruminant such as preferably a cow in an amount lying between 100 g and 2.5 kg per cow and per day.

It was found that according the invention the amount of lipids and/or proteins is increased. Preferably, the amount of lipids and/or proteins as expressed in amount per day and per ruminant and as measured via FTIR analysis is increased by between 1% and 30%, compared to ruminants in the same stage of lactation that receive feed of the same composition however without the carbohydrates according to the invention. Preferably, the amount of lipids and/or proteins is increased by between 2 and 28%, 3 and 25%, 4 or 23%, or between 5 and 20%.

It was moreover found that not only the amount of lipids or proteins in the milk can increase: the overall amount of milk as produced by a ruminant can increase as well. In an embodiment of the invention, the average amount of milk as produced by the ruminant per day is increased by between 1 and 15 wt.%, preferably by at least 1.5, 2.0, 2.5, 3, 4, or 5% and by at most 14, 13, 12, 11, or 10%.

In the Figures:

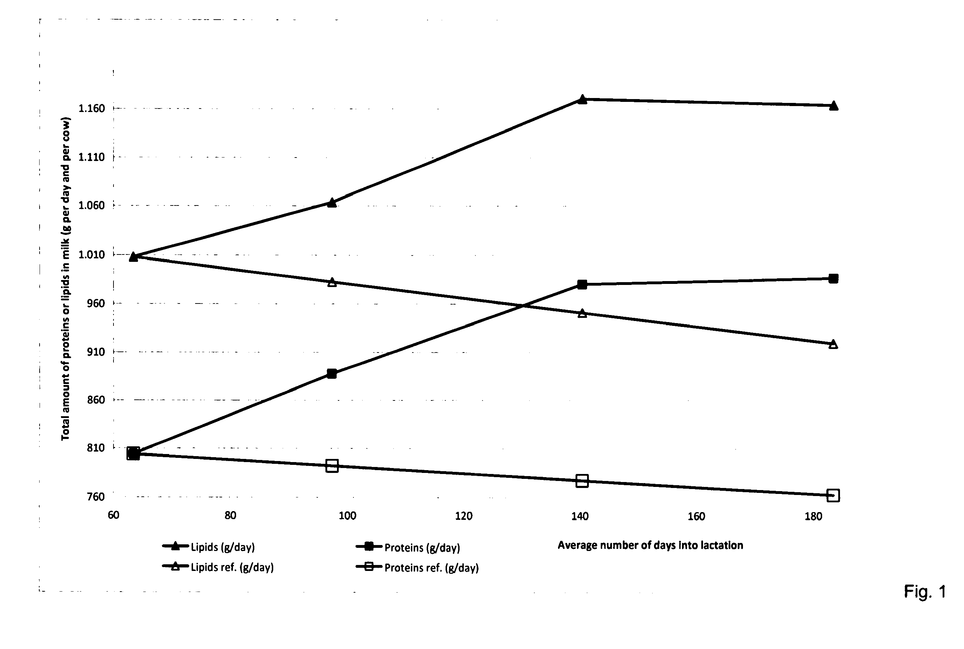

Figure 1 depicts the average total daily amount of lipids or proteins in milk as provided by the cows of Example 3, in function of the number of days the cow was into lactation. This figure shows the results of the primiparous cows. Also shown in this figure are reference data for primiparous cows from the whole of the Belgian Wallone region, using data as provided by the Belgian association of cattle breeding AWE (Association Wallonne de l'Elevage) on cows that were not fed according to the invention.

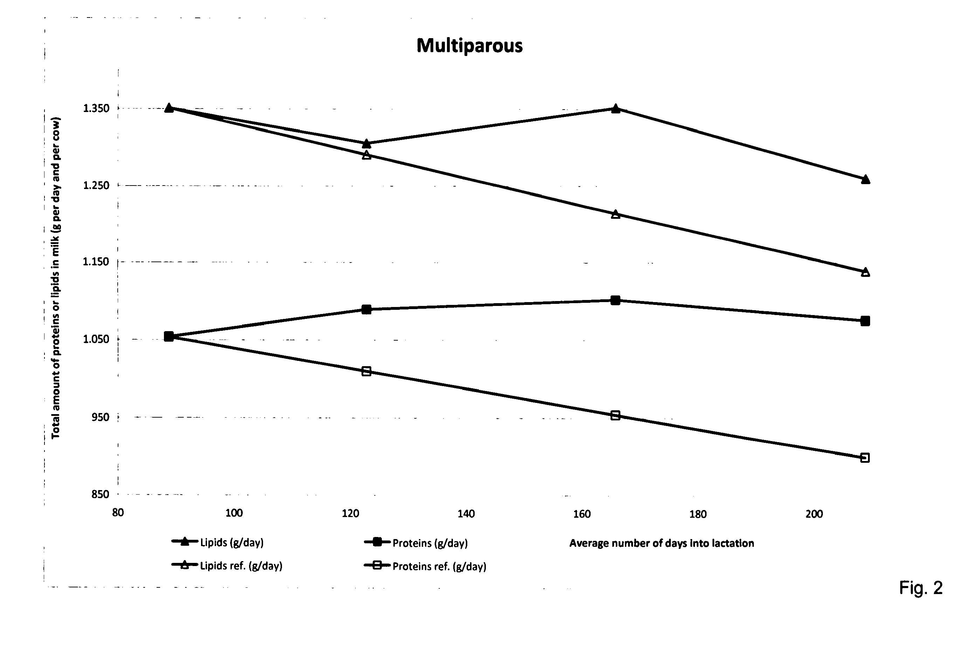

Figure 2 show the same type of data as is shown in Figure 1, however now for multiparous cows.

The invention will be elucidated by means of the following examples, without the invention being limited to the scope of the examples.

### Examples 1 - 2; Comparative Experiment A

A series of *in-vitro* fermentation tests were conducted using ruminal fluids from cows. The ruminal fluids were obtained via a direct tube access to the rumen of a living cow. The ruminal fluids were combined with hay, and then incubated with a carbohydrate. The objective of the test was to investigate the reduction of carbohydrates over time, subsequent to the moment of incubation, as an indicator of fermentability in the rumen. The selected carbohydrates were:
- Cane molasses, which is as known rich in fructose, glucose and saccharose (Comparative Experiment A)
- Isomaltulose, purity >98% (Example 1)
- Palatinose syrup (Example 2)

The series of tests was conducted over varying time periods up to 24 hours. In each test, a 40 ml sample of ruminal fluids was obtained, put into a sealable bottle, mixed with a phosphate/carbonate buffer in a 1/3 ratio, and then combined with 300mg of hay and 400 mg of the carbohydrate which was being tested. Any traces of O₂ were expulsed with CO₂, after which the bottle was sealed. The temperature was kept on a constant temperature level of 39°C during incubations of 0.5, 1, 2, 3, 5, 8, 12 and 24 hours. Upon reaching the desired incubation duration, fermentation was stopped by plunging the bottles in ice water. Samples were then taken and kept frozen until analysis.

Table 1 shows the development of carbohydrate fermentation over time, expressed as percentage of the initial value.

**Table 1**

| Time (h) | Remaining carbohydrate (%) | | |
|---|---|---|---|
| | A | 1 | 2 |
| 0 | 100 | 100 | 100 |
| 0.5 | 92.6 | 96.2 | 99.2 |
| 1 | 88.5 | 95.6 | 95.9 |
| 2 | 86.1 | 97.5 | 89.3 |
| 3 | 82.8 | 93.7 | 81.0 |
| 5 | 0 | 95.0 | 61.2 |
| 8 | 0 | 88.1 | 56.2 |
| 12 | 0 | 76.1 | 40.5 |
| 24 | 0 | 0 | 0 |

The results show that cane molasses of Comparative Experiment A, which can be described as being a mixture of soluble, fermentable, and digestible carbohydrates, is fermented rather quickly so that it can be expected that no carbohydrates will be available for digestion. By contrast, the soluble carbohydrates of Examples 1 and 2 are fermented much more slowly in the stomach so that it can be expected that these carbohydrates will be available for digestion and possibly fermentation in the intestines to a significant extent.

### Example 3

An *in-vivo* test was done, in which Palatinose syrup was incorporated into the feed of a group of 60 lactating cows. The test started when the cows were on average about 76 days into lactation (63 days for cows into their first lactation, i.e. primiparous cows; and 89 days for the multiparous cows). Since it is well known that any changes in the feed of a lactating cow should preferably be done gradually, the dosage of the Palatinose syrup was gradually increased over time. The feed compositions at selected moments in time are provided in Table 2; the numbers in the table represent kilos of ingredient provided to the per cow per day.

**Table 2**

| *Ingredient* | *Start* | *5 weeks after start* | *11 weeks after start* | *17 weeks after start* |
|---|---|---|---|---|
| Corn silage (32% dry matter) | 12 | 12 | 12 | 12 |
| Grass silage (53% dry matter) | 11 | 11 | 11 | 11 |
| Pressed sugar beet pulp (22 % dry matter) | 12 | 12 | 12 | 12 |
| Brewer's Spent Grains (22% dry matter) | 4 | 4 | 4 | 4 |
| Urea | 0 | 0 | 0,1 | 0,1 |
| Protein Concentrate (feeding supplement containing 42 wt. % proteins) | 2 | 2,1 | 2,3 | 2,5 |
| Nutex Pro (feeding supplement containing 21 wt.% proteins and 9 wt.% fat) | 3 | 3 | 3 | 2,8 |
| Minerals (feeding supplement) | 0,18 | 0,18 | 0,18 | 0,18 |
| Sodium bicarbonate | 0,15 | 0,15 | 0,15 | 0,15 |
| Palatinose syrup | 0 | 0,3 | 1,5 | 2 |

During the test, the milk production per individual cow was monitored, as well as the content of lipids and proteins in the milk as determined via FTIR.

The results were compared to averages for the whole of the Belgian Wallone region, using data as provided by the Belgian association of cattle breeding AWE (Association Wallonne de l'Elevage); the results are shown in Figures 1 and 2.

From the results in the Figures, it is clear that the cows that were fed according to the invention provided significantly more proteins and lipids via the milk, on a daily basis. The amount of proteins and lipids increased, not only relative to the reference but most of the time also on an absolute basis and coinciding with an increase in the amount of Palatinose syrup that was fed to the cows; this is contrary to the normal trend during these lactacting phases, which is that a decrease is normally observed - as reflected in the 'ref' curves in the Figures.

### Example 4

A cow was fitted with a duodenal cannula. The cow received as morning feed a mixture of 4.2 kg (dry matter) grass silage and 0.05 kg vitamin & mineral mix. Prior to giving the cow access to the morning feed, an amount of 0.3 kg isomaltulose was fed to the cow; the isomaltulose was provided in the form of an aqueous syrup, and was given directly into the mouth of the cow.

One hour after the feeding, a sample of duodenal chyme was taken via the cannula. The sample was analysed for the presence and amount of glucose, fructose, sucrose, and isomaltulose. The sample was found to contain 0.67 wt.% (as percentage of the total amount of chyme) of isomaltulose; none of the other carbohydrates was found. Considering that the dry matter content of the sample was 3.1 wt.%, the sample contained 22 wt.% of isomaltulose as calculated on dry matter.

This Example shows *in-vivo* that isomaltulose at least partly bypasses the rumen.

### Example 5

A part of jejunum of a cow aged 28 months was obtained from an abattoir (Mannheim). This part was divided into equal sections. Each section was analogously prepared and mucosa was scraped off. For each section mucosa was homogenised and centrifuged. The supernatant was used for the incubation experiments. It is known from the literature (e.g. Miyashige and Yahata 1980, Jap J Zootech Sci) that the supernatant fraction has almost all the activity of each dissacharidase of the whole homogenate.Thus, the supernatant was regarded as constituting the homogenate.

Homogenates were incubated over 6 h with isomaltulose or with trehalulose; then, any reduction in carbohydrate was measured. Na-azide as biocide was added to the homogenates in order to exclude bacterial fermentation.

The results were that on average, the amount of isomaltulose was reduced by 10.3%, and the amount of trehalulose was reduced by 8.4%.

It may be concluded from these *in-vitro* results that the own intestinal enzymes of at least the jejunum of the cow are able to hydrolyse isomaltulose and trehalulose, thereby making the monosaccharide moieties glucose and fructose available, e.g. for systemic absorption. The results thus suggest that isomaltulose and trehalulose are digestible in the intestines of ruminants such as cows.

## Claims

1. Method of increasing the amount of proteins and lipids as provided by a lactating ruminant via milk, comprising the step of feeding the ruminant between 0.3 and 15 grams per kg body weight and per day of carbohydrates that are:
• soluble,
• slowly fermentable in the stomach of the ruminant, and
• digestible and optionally fermentable in the intestines of the ruminant,
wherein the carbohydrates that are soluble, slowly fermentable in the stomach of the ruminant and digestible and optionally fermentable in the intestines of the ruminant consist essentially of isomaltulose and/or trehalulose.

2. Method according to claim 1, wherein the ruminant is a cow.

3. Method according to claim 2, wherein the cow is fed an amount lying between 0.1 and 2.5 kg of Palatinose syrup per day.

4. Method according to any one of claims 1 - 3, wherein the ruminant is in the first 70 days of lactation.

5. Method according to any one of claims 1 - 3, wherein the ruminant is more than 70 days into lactation.

6. Method according to any one of claims 1 - 5, wherein the average amount of milk as produced by the ruminant per day is increased by at least 1 wt.%.

## Patentansprüche

1. Verfahren zum Erhöhen der Menge an Proteinen und Lipiden, die von einem laktierenden Wiederkäuer über Milch bereitgestellt werden, umfassend den Schritt des Verfütterns von zwischen 0,3 und 15 g pro kg Körpergewicht und Tag an Kohlenhydraten, die:
• löslich,
• im Magen des Wiederkäuers langsam fermentierbar und
• in den Eingeweiden des Wiederkäuers verdaulich und gegebenenfalls fermentierbar sind,
an den Wiederkäuer,
wobei die Kohlenhydrate, die löslich, im Magen des Wiederkäuers langsam fermentierbar und in den Eingeweiden des Wiederkäuers verdaulich und gegebenenfalls fermentierbar sind, im Wesentlichen aus Isomaltulose und/oder Trehalulose bestehen.

2. Verfahren nach Anspruch 1, wobei es sich bei dem Wiederkäuer um eine Kuh handelt.

3. Verfahren nach Anspruch 2, wobei der Kuh eine Menge, die zwischen 0,1 und 2,5 kg Palatinose-Sirup pro Tag liegt, verfüttert wird.

4. Verfahren nach einem der Ansprüche 1 - 3, wobei sich der Wiederkäuer in den ersten 70 Tagen der Laktation befindet.

5. Verfahren nach einem der Ansprüche 1 - 3, wobei sich der Wiederkäuer mehr als 70 Tage in die Laktation befindet.

6. Verfahren nach einem der Ansprüche 1 - 5, wobei die durchschnittliche Milchmenge, die von dem Wiederkäuer pro Tag produziert wird, um mindestens 1 Gew.-% erhöht wird.

## Revendications

1. Procédé visant à accroître la quantité de protéines et de lipides dans le lait d'un ruminant en lactation, comprenant l'étape consistant à nourrir le ruminant avec 0,3 à 15 grammes par kilo de poids corporel et par jour de glucides qui :
- sont solubles,
- peuvent fermenter lentement dans l'estomac du ruminant, et
- sont digestibles et peuvent éventuellement fermenter dans les intestins du ruminant,
les glucides qui sont solubles, peuvent fermenter lentement dans l'estomac du ruminant et sont digestibles et peuvent éventuellement fermenter dans les intestins du ruminant sont essentiellement constitués d'isomaltulose et/ou de tréhalulose.

2. Procédé selon la revendication 1, dans lequel le ruminant est une vache.

3. Procédé selon la revendication 2, dans lequel la vache est nourrie avec une quantité comprise entre 0,1 et 2,5 kg de sirop de palatinose par jour.

4. Procédé selon l'une quelconque des revendications 1 à 3, dans lequel le ruminant est un ruminant au cours des 70 premiers jours de lactation.

5. Procédé selon l'une quelconque des revendications 1 à 3, dans lequel le ruminant est un ruminant après plus de 70 jours de lactation.

6. Procédé selon l'une quelconque des revendications 1 à 5, dans lequel la quantité moyenne de lait produite par le ruminant par jour est augmentée d'au moins 1 % en poids.
